# EUROPEAN PATENT APPLICATION

(11) **EP 0 733 405 A1**
(43) Date of publication of application: **25.09.1996**
(21) Application number: 95830104.6
(22) Date of filing: 22.03.1995
(51) Int. Cl.: B03C 1/033, B03C 1/005, B03C 1/01, F23R 3/02

(54) **Apparatus for purifying a gas flow**

(71) Applicant: FINMECCANICA S.p.A. AZIENDA ANSALDO, I-16128 Genova (IT)
(72) Inventor: Repetto, Francesco, I-76061 Cogoleto (GE) (IT); Drodz, Matgorzata, I-16159 Genova (IT)
(74) Representative: Falcetti, Carlo

(57) **Abstract**

An apparatus (10) for purifying a high-temperature gas flow containing solid diamagnetic and/or paramagnetic and/or ferromagnetic particles, suitable for purifying gasified coal whilst maintaining high overall efficiency of a heat installation, comprises an axial cyclone (12) through which the gas flow passes, a separator ring (16) for separating the gas flow at the outlet of the axial cyclone (12) into a primary flow having a lower concentration of particles and a high flow rate and into a secondary flow having a higher concentration of particles and a low flow rate, and an assembly of magnetic separators (22) which have superconductive windings and through which the primary flow passes.

## Description

The present invention relates to an apparatus for purifying a pressurized, high-temperature gas flow, containing solid diamagnetic and/or paramagnetic and/or ferromagnetic particles, of the type produced, for example, by a non-gaseous fuel gasification reactor for its indirect use in gas turbines.

The gasification of fuels such as coal, for example, is an optimum solution for producing at relatively low cost a gas flow which, used within the limits of a combined cycle comprising gas turbines, brings about a conversion of energy with a high thermodynamic output.

Furthermore, it is a solution which enables the harmful agents derived from the use of coal and the like to be kept under control.

Unfortunately, the gas flow normally produced contains a considerable amount of impurities which, if introduced into a gas turbine, would damage it rapidly.

This flow is produced at high temperatures and pressures, of the order of 1100 - 1600°C and 15 - 25 bar respectively. In the subsequent purification processes, it is important that the temperature and pressure do not drop far below these values in order to attain high overall efficiency which would allow the costs to be kept low, rendering coal gasification economically attractive for the production of electrical energy by means of gas turbines installed, for example, in combined types of installation.

In order to purify these gas flows, purification apparatus are currently used which comprise filters of the ceramic type, for example with ceramic plugs, combined with separator cyclones, or components which can operate at high temperatures. This restriction excludes the use of electrostatic filters, for example, which would require too drastic cooling upstream.

However, ceramic filters have certain disadvantages in addition to being expensive.

Variations in temperature, such as occur in ignition-switching off cycles, considerably shorten the useful life of these filters. In addition, they are awkward and expensive to maintain.

It should, therefore, be borne in mind that increasing the refinement of the purification process inevitably involves a localized high loss of charge in these ceramic plug filters.

The technical object on which the present invention is based resides in devising an apparatus for purifying gas flows which apparatus can overcome the above disadvantages associated with the prior art.

This object is achieved by an apparatus of the specified type, characterized in that it comprises:
- a first filtration stage, comprising:
   - a cyclone through which the gas flow passes; and
   - a ring separating the gas flow at the outlet of the cyclone into a primary flow with a lower concentration of particles and high flow rate and into a secondary flow with a higher concentration of particles and a low flow rate;
- a second filtration stage comprising at least one magnetic separator which has superconductive windings and through which the primary flow passes.

The principal advantage of the apparatus according to the invention is that it permits high overall efficiency to be maintained in an installation in which this apparatus is used, whilst at the same time reducing the wear of the installation itself and the maintenance costs.

Further characteristics and advantages of the apparatus according to the invention will appear from the following description of an embodiment thereof incorporating a coal gasification installation, given by way of non-limiting indication with reference to the appended drawings, in which:
- Figure 1 shows a block diagram of a coal gasification installation for feeding gas turbines which incorporates a purification apparatus according to the invention;
- Figure 2 shows a view in section of a component of the apparatus of Figure 1;

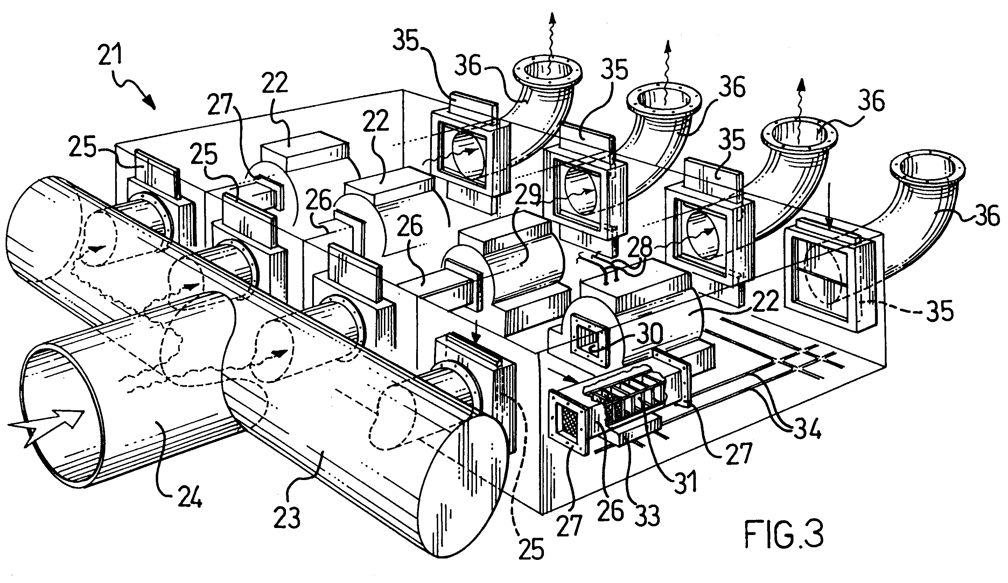

- Figure 3 shows a perspective view, partially in section, of another component of the apparatus of Figure 1;

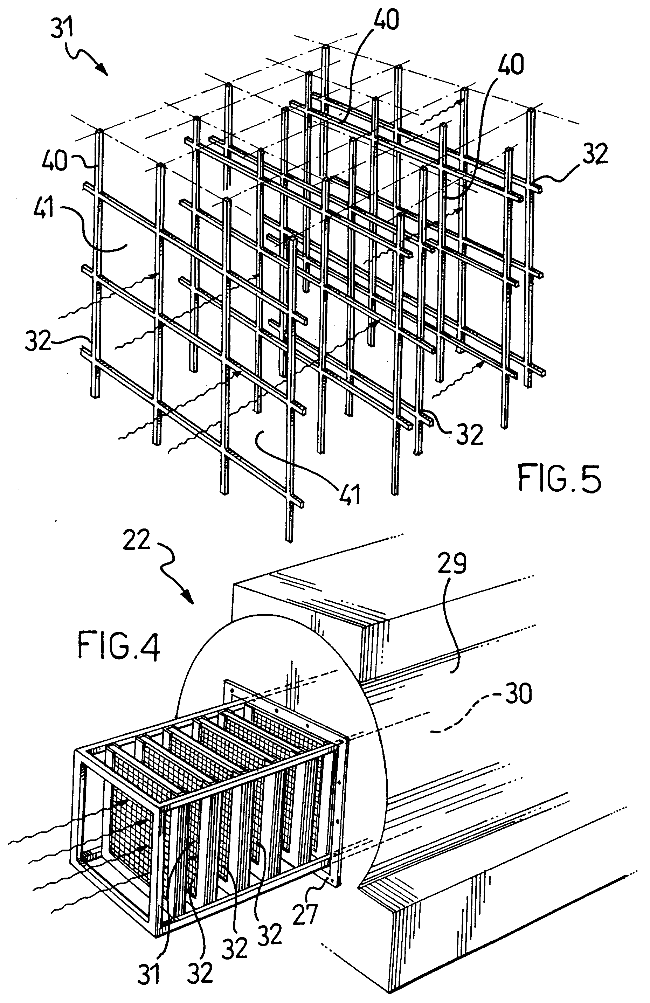

- Figure 4 shows a perspective view on enlarged scale of the component of Figure 3; and
- Figure 5 shows a perspective view of a detail of the component of Figures 3 and 4.

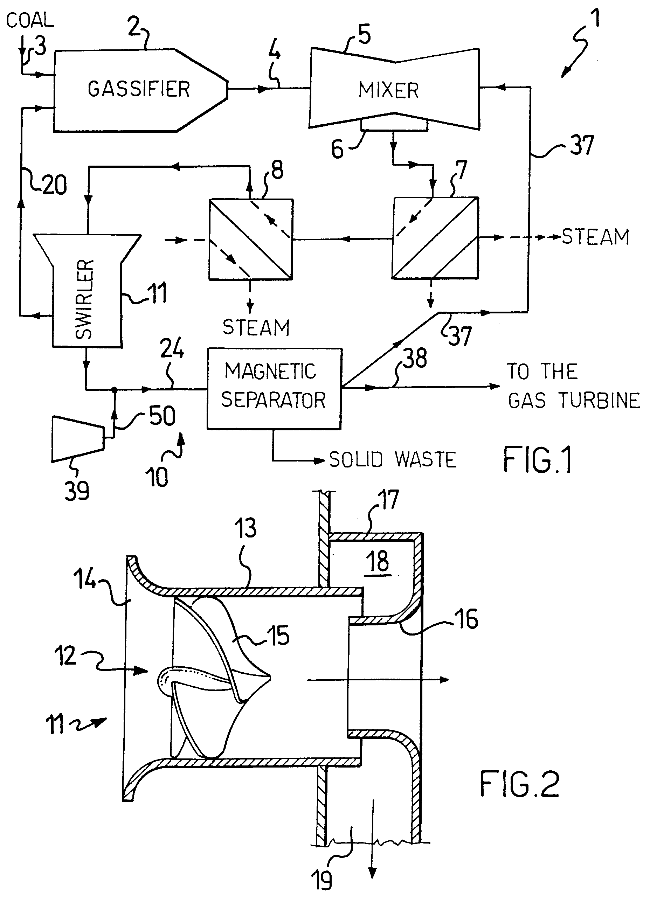

In Figure 1 a coal gasification installation is designated 1. It comprises a gasification reactor 2 which has a charging section 3 and a discharging line 4 connected to a mixer 5. The mixer 5 comprises a collector 6 connected to a first high-pressure recovery boiler 7 for producing saturated steam.

In series with the first boiler 7, the installation 1 also comprises a second recovery boiler 8 which is at medium pressure and is also used for producing saturated steam.

The second boiler 8 is hydraulically connected to an apparatus for purifying a pressurized, high-temperature gas flow, containing solid diamagnetic and/or paramagnetic and/or ferromagnetic particles, said apparatus being generally designated 10.

This apparatus 10 comprises a first filtration stage 11 which in turn comprises a cyclone 12, preferably of axial type, which has a cylindrical pipe section 13 with an inlet nozzle 14 hydraulically connected to the second boiler 8.

A propeller 15 with fixed vanes, conventionally also known as a swirler, is accommodated inside the inlet nozzle 14.

At a suitable spacing from the swirler 15 and coaxially with the cylindrical pipe 13, the first filtration stage 11 comprises a separator ring 16 fitted on the cylindrical pipe 13.

The separator ring 16 has a diameter which is advantageously smaller than that of the cylindrical pipe 13 and is shaped in the manner of a divergent nozzle connected to a bulkhead which forms a separating chamber 18.

The separating chamber 18 has a discharging section 19 hydraulically connected by a recovery line 20 to the charging section 3 of the gasification reactor 2 for recovering the particles, as will become clear from the description of the operation of the installation 1.

The separator ring 16 is in turn connected to a primary line 24 through which the primary flow is conveyed.

The apparatus 10 comprises an injection stage 39 which injects desulphurizing substances into the gas flow and is connected to the primary line 24 via an injection line 50.

The apparatus 10 further comprises a second filtration stage 21 which has a plurality of magnetic separators 22, advantageously of the type having superconductive windings, disposed in parallel downstream of a collector 23 connected to the separator ring 16 by the primary line 24.

In this way, this injection stage 39 is disposed upstream of the second filtration stage 21 having magnetic separators 22.

Each cylindrical magnetic separator 22 is connected to the collector 23 via a first gate valve 25 which runs directly into a movable chamber 26 which is interposed between the gate valve 25 and the separator 22 and which can be secured thereto on respective flanges 27.

Each magnetic separator 22 further comprises a feed line 28 connected to an armature 29, which contains the superconductive windings (not shown), and a filtration chamber 30 which passes through the entire magnetic separator 22 parallel to the axis thereof, or parallel to the primary flow passing therethrough.

The filtration chamber 30 is thus surrounded by superconductive windings through which passes a very high electric current which causes a magnetic field having lines of force parallel to the primary flow.

The filtration chamber 30 houses a matrix 31 of a plurality of grids 32 which are parallel to one another and transverse relative to the primary flow passing through the magnetic separator 22.

The grids 32 are made of ferromagnetic material immersed in a magnetic field far above the saturation point which in turn renders it magnetic.

The intensity of the overall magnetic field is such that it can interact with solid diamagnetic or paramagnetic or even, evidently, ferromagnetic particles.

The grids 32 are formed of wires 40 disposed in preferably square meshes 41 and are staggered relative to one another so as to provide a greater filtering surface area.

Each wire 40 advantageously has a diameter of less than 100 µm, preferably of 50 µm, and each mesh 41 advantageously has an aperture of between 200 and 400 µm, preferably of 300 µm.

Overall, in the direction of the gas passing therethrough, the matrix 31 has a filling factor which is advantageously less than 20% and is preferably 18%.

The matrix 31 can move through the filtration chamber 30 and the movable chamber 26 by virtue of suitable displacement means (not shown). Furthermore, its dimensions are such that it can be housed entirely within the movable chamber 26 which is supported by a carriage 33 disposed on rails 34.

Downstream of each magnetic separator 22 is a second gate valve 35 leading into a discharging pipe 36.

With reference to Figure 1, departing from the second filtration stage 21 are a cooling line 37, which is connected to the mixer 5, and a further connection line 38 which feeds a gas turbine (not shown) or a storage installation with purified combustible gas.

The operation of the gasification installation 1 and of the purification installation 10 will now be described with reference to the drawings.

Inside the gasification reactor 2, the coal, introduced in powder form, is converted by gasification into combustible gas containing various types of impurities including solid diamagnetic, paramagnetic and ferromagnetic particles.

This combustible gas, at high pressure and temperature of the order of 15 - 20 bar and 1500 - 1600°C, is introduced into the mixer 5 in which it is mixed with a flow of already purified combustible gas coming from the second filtration stage 21 via the cooling line 37.

The object of this mixing process is to lower the temperature of the combustible gas and partially dilute the impurities therein.

However, the collector 6 collects combustible gas having a high pressure and a temperature of the order of 850 - 1100°C, in spite of the preceding mixing process.

This gas is then cooled in the successive recovery boilers 7, 8 in which saturated steam is produced which can be used for various purposes, such as industrial applications, remote heating or electrical energy production.

At the outlet from the second recovery boiler, there is thus a gas flow which is still at a high pressure and at a temperature which is lower but still high, being of the order of 600 - 1000°C.

The gas flow is introduced into the first filtration stage 11 of the apparatus 10 where it passes through the separator cyclone 12.

At the outlet from this separator cyclone 12 the gas flow encounters the separator ring 16 which separates the latter into a primary flow having a lower concentration of particles and high flow rate and a secondary flow having a higher concentration of particles and a low flow rate.

As is known, axial cyclones are particularly efficient with respect to solid particles having larger dimensions and mass, since axial cyclones ensure a primary flow containing solid particles substantially having dimensions which are less than 5 µm.

Furthermore, the ratio between the flow rates in terms of mass of the secondary and primary flows is less than 10%.

The secondary flow is collected in the separating chamber 18 and, via the discharging section 19 and the recovery line 20, is advantageously but not necessarily re-introduced into the gasification reactor 2 via its charging section 3.

The primary flow flows through the primary line 24, in which it is subjected to the injection of desulphurizing substances by means of the injection stage 39 and the injection line 50.

These desulphurizing substances can be, for example, ferric oxide, zinc ferrite, zinc copper ferrite, zinc titanate or copper ferrite aluminate, and are injected in powder form.

The molecules of sulphurous compounds (H₂S, COS) and also some of the particles of impurities of the primary flow which, being predominantly but not exclusively diamagnetic, increase the overall magnetic susceptibility, coalesce on this powder, increasing the efficiency of the following magnetic separators 22.

In the second stage 21, the primary flow reaches the magnetic separators 22 via the first, open gate valves 25, passing through the collector 23 and the movable chambers 26 disposed between the first gate valves 25 and the magnetic separators 22.

Inside each magnetic separator 22, or the filtration chamber 30, the diamagnetic and paramagnetic particles of the primary flow react with the magnetic field present there.

In particular, by virtue of the particular arrangement of the grids 32, the particles, passing through the matrix 31, fall within the pick-up radius of the magnetic field established in the ferromagnetic material of the grids 32 and are picked up thereby.

Advantageously, inside the magnetic separators 22 is a magnetic field of which the intensity is greater than 2 Tesla.

This value is certainly greater than the saturation value for the wires 40 of the grids 32 but nevertheless magnetic field gradients are established in the matrix 31, between the meshes 41 of the grids 32 and the surrounding space, and, as is known, help to pick up the solid particles, whether they are diamagnetic, paramagnetic or ferromagnetic.

The second filtration stage can thus block the above solid particles having dimensions of more than 2 µm and a large part of the particles having smaller, or even submicronic, dimensions.

After the second filtration group, the primary gas flow is at a temperature of more than 500°C. Some of this flow is mixed in the mixer 5 with the combustible gas which comes directly from the gasification reactor 2 and is at a temperature of approximately 1570°C.

It should be noted that the passage cross-sections necessary in the second filtration stage 21 are restricted.

For example, for a gas flow rate of 400,000 Nm³/h at 20 bar, reaching a primary flow speed of 25 m/s, the passage cross-section is approximately 0.5 m². Values of this order of magnitude are compatible with the use of induction magnets with superconductive windings which, otherwise, would be too expensive.

Furthermore, the entire second stage 21 is compact and, owing to the reduced filling factor of the filtration chambers 30, has reduced losses of charge.

Subsequently, the temperature of the gas leaving the second filtration stage 21 can be as much as 1000°C since the performance of the magnetic separator, even at such high temperatures which are higher than the Curie point of the materials which can be used for the matrices, is not appreciably reduced if the intensity of the magnetic field is as high as the one used (>2 Tesla).

The particles picked up in the filtration chamber 30 of the matrix 31 can be extracted by removing the matrix 31 from inside the magnetic separator 22.

To this end, it is necessary to close the gate valves 25, 35, move the matrix 31 inside the respective movable chamber 26, disconnect the latter from the first gate valve 25 and from the separator 22 by acting on the flanges and move the movable chamber 26 supported by the carriage 33 on the rails 34. The matrix 31 is thus removed from the magnetic separator 22 and can be cleaned or replaced.

Advantageously, it is not necessary to deactivate the superconductors in order to perform the above operations.

The parallel arrangement of the magnetic separators 22 allows the matrices 31 to be serviced without shutting down the gasification installation 1.

A possible variant of the second filtration stage consists in providing a magnetic field having lines of flux which are perpendicular, rather than parallel, to the direction of the primary gas flow. This configuration can be obtained with a magnetic winding with a seat which is cylindrical instead.

Furthermore, the matrix inside each magnetic separator can be replaced by different systems, for example using an automatic apparatus which continually replaces these matrices such that the shut-down time of each magnetic separator is reduced to a minimum.

Subsequently, the stage for injecting desulphurizing substances can be disposed not only between the first and second filtration stages but also upstream of the first filtration stage.

It is further understood that the apparatus described above can be used in different installations, such as for example an installation for the gasification of refinery waste or solid urban refuse or even biomasses, or even in a pressurized or atmospheric fluid bed combustion plant.

In order to satisfy particular and appropriate requirements, a person skilled in the art could apply numerous other variants to the apparatus for purifying a gas flow as described above, which variants are all within the protective scope of the invention as defined by the following claims.

## Claims

1. Apparatus (10) for purifying a pressurized, high-temperature gas flow, containing solid diamagnetic and/or paramagnetic and/or ferromagnetic particles, characterized in that it comprises:
- a first filtration stage (11), comprising:
- a cyclone (12) through which the gas flow passes; and
- a ring (16) separating the gas flow at the outlet of the cyclone (12) into a primary flow with a lower concentration of particles and high flow rate and into a secondary flow with a higher concentration of particles and a low flow rate;
- a second filtration stage (21) comprising at least one magnetic separator (22) which has superconductive windings and through which the primary flow passes.

2. Apparatus (10) according to claim 1, in which the cyclone (12) is of the axial type.

3. Apparatus (10) according to claim 1, in which the axial cyclone (12) ensures a primary flow containing solid particles having dimensions of less than 5 µm.

4. Apparatus (10) according to claim 1, which comprises a stage (39) which injects desulphurizing substances into the gas flow and is disposed upstream of the second filtration stage (21).

5. Apparatus (10) according to claim 1, in which the at least one magnetic separator comprises internally a magnetic field having an intensity of more than 2 Tesla.

6. Apparatus (10) according to claim 1, in which the at least one magnetic separator (22) is cylindrical and has a filtration chamber (30), which passes through the magnetic separator (22) parallel to the axis thereof, surrounded by the superconductive windings such that a magnetic field is produced which has lines of force parallel to the axis of the magnetic separator (22).

7. Apparatus (10) according to claim 6, in which the filtration chamber (30) houses a matrix (31) of a plurality of grids (32) made of ferromagnetic material, which are parallel to one another and transverse relative to the primary flow, the grids (32) being formed by wires (40) disposed in square meshes (41) and staggered relative to one another.

8. Apparatus (10) according to claim 7, in which the diameter of each wire is less than 100 µm.

9. Apparatus (10) according to claim 8, in which the diameter of each wire is 50 µm.

10. Apparatus (10) according to claim 7, in which the aperture of each mesh (41) is between 200 and 400 µm.

11. Apparatus (10) according to claim 10, in which the aperture of each mesh (41) is 300 µm.

12. Apparatus (10) according to claim 7, in which the matrix (31) has a filling factor of less than 20% in the direction of the primary flow.
